# EUROPEAN PATENT SPECIFICATION

(11) **EP 4 193 514 B1**
(45) Date of publication and mention of the grant of the patent: **02.10.2024**
(21) Application number: 21755581.2
(22) Date of filing: 05.08.2021
(51) Int. Cl.: H04W 76/14, H04L 1/1812, H04L 1/00, H04L 1/08, H04W 76/30, H04W 80/02, H04W 88/04, H04L 69/22, H04L 1/1803

(54) **DATA AND FEEDBACK RELAYING**
DATEN- UND FEEDBACKWEITERLEITUNG
RELAIS DE DONNÉES ET DE RÉTROACTION

(30) Priority: 05.08.2020 US 202063061715 P; 05.08.2020 US 202063061725 P; 05.08.2020 US 202063061731 P; 05.08.2020 US 202063061734 P; 05.08.2020 US 202063061746 P
(43) Date of publication of application: 14.06.2023
(73) Proprietor: Lenovo (Singapore) Pte. Ltd., New Tech Park 556741 (SG)
(72) Inventor: BASU MALLICK, Prateek, 63303 Dreieich (DE); LOEHR, Joachim, 65203 Wiesbaden (DE); GANESAN, Karthikeyan, 64569 Nauheim (DE); KUCHIBHOTLA, Ravi, Chicago, Illinois 60680 (US)
(74) Representative: Openshaw & Co.
(86) International application number: PCT/IB2021/057178
(87) International publication number: WO 2022/029665

(56) References cited:
- EP-A2- 2 882 129
- US-A1- 2020 036 484

## Description

### CROSS-REFERENCE TO RELATED APPLICATIONS

This application claims priority to United States Patent Application Serial Number 63/061,715 entitled "APPARATUSES, METHODS, AND SYSTEMS FOR A SIDELINK RESOURCE ALLOCATION PROCEDURE FOR SIDELINK RELAY COMMUNICATION" and filed on August 5, 2020 for Joachim Loehr, United States Patent Application Serial Number 63/061,725 entitled "MECHANISMS FOR IMPROVED COMMUNICATIONS USING RELAY OVER SIDELINK RADIO INTERFACE" and filed on August 5, 2020 for Prateek Basu Mallick, United States Patent Application Serial Number 63/061,731 entitled "SELECTION OF RELAY DEVICE IN SIDELINK COMMUNICATIONS" and filed on August 5, 2020 for Prateek Basu Mallick, United States Patent Application Serial Number 63/061,734 entitled "MECHANISMS TO SUPPORT TRANSMISSION FEEDBACK OVER SIDELINK RELAY" and filed on August 5, 2020 for Prateek Basu Mallick, and United States Patent Application Serial Number 63/061,746 entitled "APPARATUSES, METHODS, AND SYSTEMS FOR DETERMINING THE BEHAVIOUR OF A SIDELINK RELAY UE USING MCR AND ZONE" and filed on August 5, 2020 for Karthikeyan Ganesan.

### FIELD

The subject matter disclosed herein relates generally to wireless communications and more particularly relates to data and feedback relaying.

### BACKGROUND

In certain wireless communications networks, relays may be used to transmit and/or receive data transmitted between UEs. Feedback transmissions may be made relating to data transmitted via relays.

US 2020/036484 A1 relates to a method and apparatus for wireless communication of a wireless node in a wireless communication system.

### BRIEF SUMMARY

Methods for data and feedback relaying are disclosed. Apparatuses and systems also perform the functions of the methods. One method is as claimed in claim 1.

One apparatus is as claimed in claim 6.

### BRIEF DESCRIPTION OF THE DRAWINGS

A more particular description of the embodiments briefly described above will be rendered by reference to specific embodiments that are illustrated in the appended drawings.

Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for data and feedback relaying;
Figure 2 is a schematic block diagram illustrating one embodiment of an apparatus that may be used for data and feedback relaying;
Figure 3 is a schematic block diagram illustrating one embodiment of an apparatus that may be used for data and feedback relaying;
Figure 4 is a schematic block diagram illustrating one embodiment of a system for relay communications;
Figure 5 is a communication diagram illustrating one embodiment of a system for communications including data and feedback relaying; and
Figure 6 is a flow chart diagram illustrating one embodiment of a method for data and feedback relaying. Figure 6, together with paragraphs [0078] to [0081], is of particular relevance for understanding the claimed invention.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

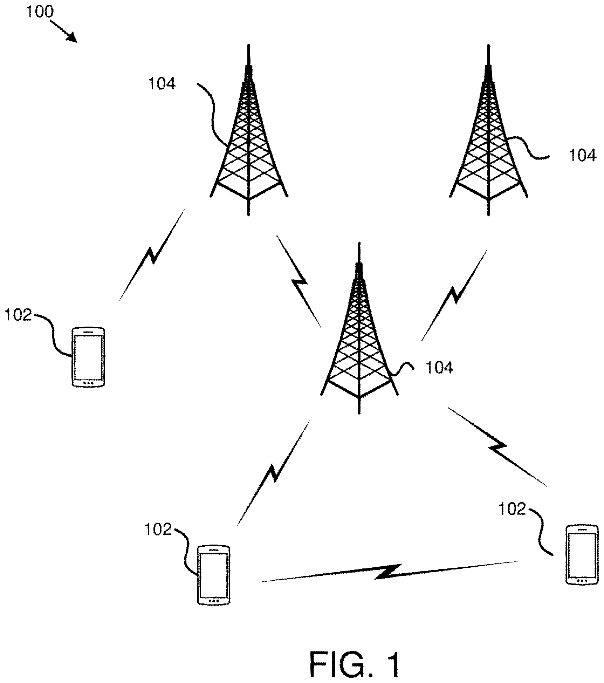

Figure 1 depicts an embodiment of a wireless communication system 100 for data and feedback relaying. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may receive, by a second sidelink user equipment, a first data packet from a first sidelink user equipment. In some embodiments, the remote unit 102 may receive a feedback request with the first data packet. In certain embodiments, the remote unit 102 may transmit, by the second sidelink user equipment, the first data packet to at least one third sidelink user equipment. In various embodiments, the remote unit 102 may receive, at the second sidelink user equipment, feedback about a decoding status of the first data packet from the at least one third sidelink user equipment. In some embodiments, the remote unit 102 may determine a result of the feedback request at the second sidelink user equipment based on the feedback. In certain embodiments, the remote unit 102 may transmit, from the second sidelink user equipment, the result of the feedback request to the first sidelink user equipment. Accordingly, the remote unit 102 may be used for data and feedback relaying.

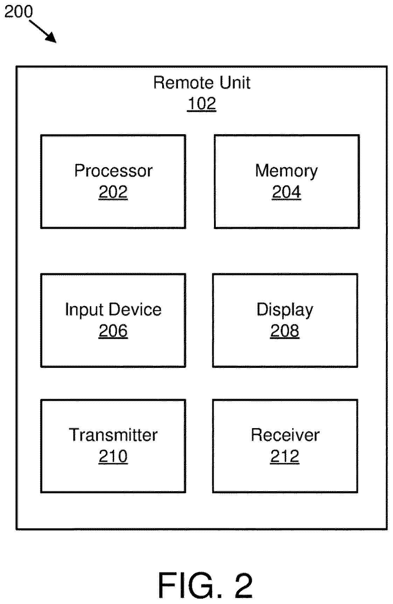

Figure 2 depicts one embodiment of an apparatus 200 that may be used for data and feedback relaying. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the receiver 212: receives a first data packet from a first sidelink user equipment; and receives a feedback request with the first data packet. In various embodiments, the transmitter 210 transmits, by the second sidelink user equipment, the first data packet to at least one third sidelink user equipment. In some embodiments, the receiver 212 receives, at the second sidelink user equipment, feedback about a decoding status of the first data packet from the at least one third sidelink user equipment; the processor 202 determines a result of the feedback request at the second sidelink user equipment based on the feedback; and the transmitter 210 transmits, from the second sidelink user equipment, the result of the feedback request to the first sidelink user equipment.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

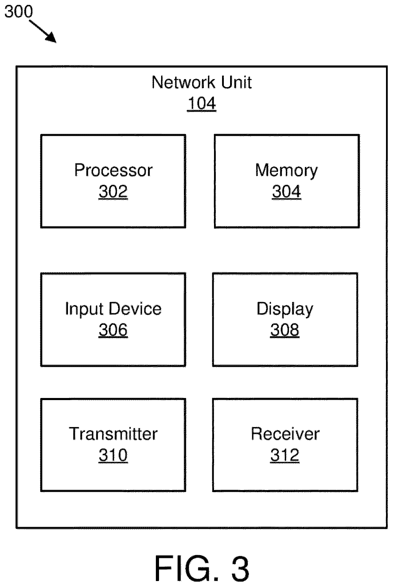

Figure 3 depicts one embodiment of an apparatus 300 that may be used for data and feedback relaying. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, such as in new radio ("NR") vehicle to everything ("V2X") communication, hybrid automatic repeat request ("HARQ") feedback may be used for groupcast and unicast communication to improve spectral efficiency. For communicating feedback made by receiver user equipments ("UEs") to a transmitter UE for a transmission made by the transmitter, the following options are available: 1) in a first option, a negative acknowledgment ("NACK") only common feedback resource may be used - in this option all receivers that have failed to successfully decode a received physical sidelink shared channel ("PSSCH") data packet will send a HARQ NACK on a resource common to all the receivers - the HARQ NACK feedback may be subframe number ("SFN") combined over the air; and 2) in a second option, receiver UE specific acknowledgement ("ACK") and/or NACK feedback resources - in this option every receiver that received a physical sidelink control channel ("PSCCH") transmission (e.g., sidelink control information ("SCI")) and attempted to decode a corresponding PSSCH transmission (e.g., data packet) may feedback HARQ ACK and/or NACK in resources depending on whether they were successful in decoding the data packet.

In some embodiments, there may be two types of relays: 1) UE-to-network coverage extension: UE to network ("Uu") interface coverage reachability may be necessary for UEs to reach a server in a packet data network ("PDN") or counterpart UE out of a proximity area - various embodiments for UE-to-network relays may be limited to evolved universal terrestrial access ("EUTRA") based technologies, and may not be applied to an NR-based system (e.g., for both next generation ("NG") radio access network ("RAN") ("NG-RAN") and NR-based sidelink communications); and 2) UE-to-UE coverage extension: current proximity reachability may be limited to a single-hop sidelink link either via EUTRA-based or NR-based sidelink technology - this may not be sufficient if there is no Uu coverage, considering a limited single-hop sidelink coverage.

In various embodiments, for both sidelink ("SL") relay types, a SL remote UE may discover and select a relay for transmissions to another SL remote UE. In certain embodiments, a reliability requirement for V2X communication may be up to 10^-5 (e.g., performance quality index ("PQI") 91) and this may increase with for public safety and other applications. In some embodiments, HARQ feedback based transmission and/or retransmission may be used for communication using a sidelink relay.

It should be noted that the following terminology is used in this document: 1) UE-to-network relay: N-relay; 2) UE-to-UE relay: UE-relay; and 3) Relay = either a UE-to-network relay or a UE-to-UE relay.

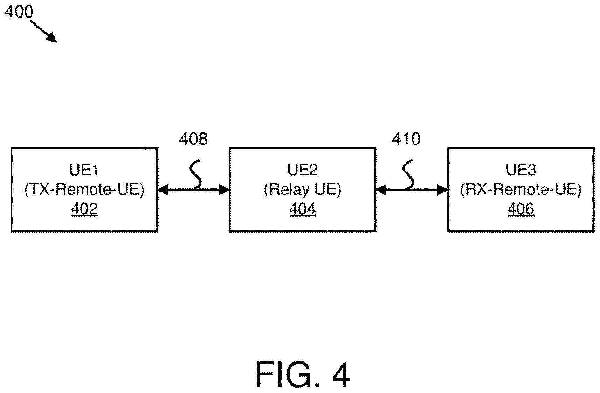

Figure 4 is a schematic block diagram illustrating one embodiment of a system 400 for relay communications. The system 400 includes a UE1 402 (e.g., TX-Remote-UE, first UE, one or more transmit ("TX") UEs), a UE2 404 (e.g., relay UE, second UE), and a UE3 406 (e.g., RX-Remote-UE, third UE, one or more RX UEs). The UE1 402 communicates with the UE2 404 over a first interface 408, while the UE2 404 communicates with the UE3 406 over a second interface 410.

The UE1 402 is a UE that has some application data to be sent to another remote UE (UE3 406) via a relay (UE2 404). It should be noted that, the UE3 406 may have data to send to the UE1 402 via the UE2 404 (in this context UE3 406 would take the role of a transmitter UE). Accordingly, the terms and roles shown in Figure 4 may be with respect to a particular data packet. In some embodiments, more than one relay is used (e.g., UE2a and UE2b), thus the UE2 404 may be a generalized representation of one or more relay UEs. In various embodiments, UE3 406 may act as a relay UE to another UE (e.g., UE4).

In a first embodiment, several different implementations may be encompassed for how to determine if a HARQ feedback is to be used on the two interfaces in Figure 4.

In a first implementation of the first embodiment, a relay UE decides a transmission scheme (e.g., HARQ feedback ("HF") or blind) to use on the second interface 410. For this purpose, the UE1 402 sends at least PQI of a concerned bearer that the UE2 404 has agreed to relay to UE3 406. If UE3 406 is a part of a group and groupcast transmission needs to be made on the second interface 410, the UE1 402 sends a minimum communication range ("MCR") and group size information to the UE2 404 if it has been received by the UE1 402 from its upper layer. The relay (e.g., UE2 404) takes into account a packet delay budget ("PDB") corresponding to the PQI and calculates a remaining PDB. The remaining PDB is PDB minus an average link delay on the first interface 408. The average link delay on the first interface 408 may be determined as an average delay over a period if the UE1 402 was using a timestamp to mark the arrival of data in its layer 2 ("L2") buffers and sends this timestamp to the UE2 404. In the absence of this timestamp-based determination, a relay UE (e.g., UE2 404) may deduct a fixed time from the PDB. For example, the fixed time may be between 1 and 5 ms.

In another implementation of the first embodiment, a deduction from a PDB may be dependent on a timer 'T1' and atimer 'T2' used by UE1 402 (e.g., UE1 402 may signal used values to UE2 404 when handshaking to add the bearer to the relay). Timers 'T1' and 'T2' may be predetermined and/or defined. The UE1 402 can't use the entire PDB as 'T2' since the UE2 404 may need finite time in attempting to transmit a transport block TB (e.g., received from UE1 402) to the UE3 406. Timer 'T2' may be apportioned beforehand (e.g., during handshake). A ratio may also be used. If the ratio is 50%, then both the UE1 402 and the UE2 404 have half of the PDB to transmit the TB to their respective destination. In certain embodiments, the UE1 402 may indicate a time value (e.g., 'x' ms) to UE2 404 for the first interface 408. The UE2 404 may then deduct 'x' ms from the PDB to derive its remaining PDB (e.g., 'T2').

In one implementation of the first embodiment, if the UE1 402 is unable to transmit a TB to the UE2 404 in its part of a PDB, the TB is not transmitted and both the UE1 402 and the UE2 404 will give up on transmission of the TB, and clear their HARQ and/or soft buffers. In various embodiments, if there is another path (e.g., another relay), the UE1 402 may try to transmit the TB using that path if the overall PDB may be met.

In another implementation of the first embodiment, a PDB is not a hard deadline and a TB may still be delivered beyond the PDB. This ability may be indicated by higher layer signaling to the UE1 402. In this implementation, even if the UE1 402 is unable to transmit the TB to the UE2 404 in UE1's 402 part of the PDB, the TB is still attempted to be transmitted until a maximum number of allowed retransmissions on the first interface 408.

In certain embodiments, the UE1 402 sends sl-HARQ-FeedbackEnabled as determined for an entire TB (e.g., enabled or disabled) along with the TB that is being transmitted to the UE2 404. The feedback enabled and/or disabled indication may be signaled in corresponding SCI (e.g., PSCCH). The relay may not pack data coming from different Tx-Remote-UEs for the same Rx-Remote-UE with different feedback configurations (e.g., a TB towards a particular Rx-Remote-UE may only contain data with either feedback enabled or feedback disabled, but not both).

In some embodiments, a relay UE may decide if it should transmit HARQ feedback or make blind retransmissions. Therefore, the relay UE may consider if PSFCH resources are available for at least one resource pool for mode 2 communication, or if a mode 1 grant has corresponding PSFCH resources (e.g., availability of physical uplink control channel ("PUCCH") resources may be taken as a proxy). As an example, the UE2 404 may decide (e.g., for making blind retransmissions) if at least one of the following is true: 1) required reliability is equal to higher than 10^-4; 2) remaining PDB is insufficient for HARQ based retransmission; 3) physical sidelink feedback channel ("PSFCH") resource is not available; 4) channel busy ratio ("CBR") (e.g., channel congestion) is higher than a threshold; and/or 5) logical channel configuration (e.g., sl-HARQ-FeedbackEnabled set disabled): the logical channel configuration may be signaled to an N-relay UE from its serving gNB and a UE-relay may use the pre-configuration. The logical channel configuration may configure each logical channel towards the second interface 410 such that data from one or more remote UE1s 402 with a specific PQI (or a PQI range) may only be mapped to the logical channel. The configuration may set the sl-HARQ-FeedbackEnabled to "enabled" or "disabled". Otherwise, a HARQ feedback-based retransmission may be made.

In one embodiment of the first implementation of the first embodiment, a transmission scheme on the second interface 410 may be mixed (e.g., a fixed number of blind retransmissions followed by one or more feedback-based re-transmissions).

In a second implementation of the first embodiment, the UE1 402 decides a transmission scheme (e.g., HF or blind) on the second interface 410 based on various principles including logical channel configuration (e.g., sl-HARQ-FeedbackEnabled), and signals the determined behavior to the UE2 404 using SCI (e.g., PSCCH) on the first interface 408 or using UE to UE ("PC5") radio resource control ("RRC") signaling. In doing this, the remaining PDBs (e.g., UE 1402 and UE2 404) may be calculated as described in other embodiments. The UE2 404 will follow the decision signaled by the UE1 402 and perform HARQ feedback-based retransmissions or blind retransmissions ("BRs") on the second interface 410 towards the UE3 406.

In a third implementation of the first embodiment, the UE1 402 decides a transmission scheme (e.g., HARQ feedback-based retransmissions or BRs) on the first interface 408 like in other configurations except that a remaining PDB at the UE1 402 may be calculated as described in other embodiments.

In a fourth implementation of the first embodiment, a transmission scheme on the first interface 408 is always fixed (e.g., fixed number of blind retransmissions). If the UE2 404 receives a TB successfully, it may start the transmission of this TB towards the UE3 406.

In a fifth implementation of the first embodiment, a transmission scheme on the first interface 408 is mixed (e.g., fixed number of blind retransmissions followed by one or more feedback-based re-transmissions).

It should be noted that, in any implementation, if the UE1 402 is unable to transmit a TB to the UE2 404 in its part of the PDB, the TB is no longer retransmitted and both the UE1 402 and the UE2 404 will give up transmission of the TB and clear their HARQ and/or soft buffers. However, if there is another path (e.g., another relay), the UE1 402 may still try to transmit the TB using that path if the overall PDB may still be met. In certain implementations of the first embodiment, a PDB is not a hard deadline and a TB may still be delivered beyond the PDB. This possibility may be indicated by a higher layer to the UE1 402. In such implementations, even if the UE1 402 is unable to transmit the TB to the UE2 404 in its part of the PDB, the TB is still attempted to be transmitted until a maximum number of allowed retransmissions on the first interface 408.

In any implementation, the UE1 402 may send sl-HARQ-FeedbackEnabled as determined for an entire TB (e.g., enabled or disabled) along with the TB that is being transmitted to the UE2 404. The feedback enabled and/or disabled indication may be signaled in a corresponding SCI (e.g., PSCCH). The relay may not pack data coming from different Tx-Remote-UEs towards the same Rx-Remote-UE with different feedback configuration (e.g., a TB towards a particular Rx-Remote-UE may only contain data with either feedback enabled or feedback disabled, but not both).

In a second embodiment, if using one or more relays, a relay behavior is described in relation to when and how it sends HARQ feedback to the UE1 402 (e.g., on the first interface 402). In the second embodiment, the UE2 404 may send HARQ feedback on a PSFCH channel.

In one implementation of the second embodiment, the UE2 404 sends HARQ feedback on a PSFCH channel. A HARQ ACK is transmitted if the relay UE can decode data (e.g., TB transmitted by the UE1 402) correctly, otherwise a NACK is sent. One of an ACK or NACK transmission may be discontinuous transmission ("DTX"). A HARQ buffer at the UE1 402 and a soft buffer at the UE2 404 may be flushed if a PDB (e.g., remaining PDB) is exceeded, a maximum number of HARQ retransmissions has been reached, or a packet (e.g., TB) was correctly decoded at the UE2 404 (e.g., ACK received by the UE1 402).

In another implementation of the second embodiment, after having received a TB successfully (and sending a HARQ ACK to the UE1 402 if HARQ feedback based transmission is on the first interface 408), a feedback is transmitted only if data (e.g., from the TB received on the first interface 408) to each Rx-remote-UEs is transmitted successfully. This can be done using a packet data convergence protocol ("PDCP") status reporting for layer 3 ("L3") based relaying or using radio link control ("RLC") status reporting on the first interface 408 if an RLC ACK is transmitted if a corresponding TB on the second interface 410 was successfully transmitted.

In another variation of the second embodiment, instead of transmitting the PDCP and/or RLC status reporting for each TB received at the UE2 404 from the UE1 402, the UE2 404 may accumulate reports for multiple TBs and send together, either periodically or for a certain number of TBs. In some embodiments, the UE1 402 may be able to poll the UE2 404 to seek a status report.

In another implementation of the second embodiment, after having received a TB successfully (and sending HARQ ACK to the UE1 402 for HARQ feedback based transmission on the first interface 408), both HARQ ACK and NACK feedback received from the UE3 406 at the UE2 404 may be forwarded by the UE2 404 back to the UE1 402 if the TX remote UE 1 402 multiplexes sidelink data towards more than one receive ("RX") remote UE (e.g., multiple UE3 406) served by the same relay UE2 404 into a TB and if transmission on the second interface 410 is successful for some receiver remote UEs but not for others. This may be done using a PSFCH resource except that a member ID of the UE3 406 may be based on an appearance of a sidelink ("SL") shared channel ("SCH") ("SL-SCH") subheader. A first SL-SCH subheader may appear at a leftmost side of a received medium access control ("MAC") protocol data unit ("PDU") on the first interface 408 and may be allocated a member ID of 0, a next SL-SCH subheader amy be allocated a member ID of 1, and so forth. If a configuration goes beyond the UE2's 404 capability to transmit individual PSFCHs simultaneously, feedback (e.g., ACK and/or NACK) multiplexing may be used (e.g., by using various techniques). In one example, 8 different reference signals may be used if 3 different UE3's 406 data was multiplexed in a TB transmitted on the first interface 408.

In certain embodiments, a new MAC control element ("CE") (e.g., with a reserved logical channel identifier ("LCID") value) may be used by the UE1 402 to request the UE2 404 to send specific feedback for transmission on the second interface 410 to UE3s 406. The specific feedback implies that the UE1 402 seeks feedback only about particular Rx-remote-UEs (and not other Rx-remote-UEs) or even about a particular logical channel of a particular UE3 406. One way to implement this may be by including two bitmaps of a fixed length (e.g., 8 bits each), the first bitmap indicating the Rx-remote-UEs - the first bit = first Rx-remote-UE appearing in the TB from left; next bit = next Rx-remote-UE appearing in the TB from left, and so forth. The second bitmap contains a request for each logical channel ("LCH") of the Rx-remote-UEs indicated using the first bitmap. If there is more than one bit set (e.g., to TRUE) in the first bitmap, there may be as many second bitmaps required. There may be another signaling structure possible to achieve the same. The MAC CE may contain an integer Request_identifier field. The UE2 404 may use the Request_identifier field for a response containing feedback of a requested transmission.

In some embodiments, a HARQ TX buffer at the UE1 402 may be flushed if: 1) all ACKs are received on the first interface 408; and 2) a highest PDB among all of the receiver remote UEs is exceeded or a maximum number of HARQ retransmissions has been reached.

In various embodiments, HARQ TX buffers at the UE2 404 may be flushed if: 1) a corresponding ACK for a particular UE3 406 is received on the second interface 410; and 2) a corresponding PDB or a maximum number of HARQ retransmissions has been reached for a corresponding UE3 406.

In certain embodiments, only an ACK is indicated by the UE2 404 if the relay would like the Tx-remote-UE to stop retransmitting on the first interface 408, irrespective of an actual status of transmission on the second interface 410. This may be done in configurations in which a HARQ buffer is emptied in the UE2 404 due to no HARQ process identifier ("HPID") being available for a higher priority data, one or more data not transmitted on a second interface 410 due to pre-emption, and so forth. All HARQ related buffers may be flushed at this point.

In a third embodiment), if L3 relaying is used and a PDCP entity is present in a relay protocol stack, the UE1 402 sends a PDCP discard to the UE2 404 if a discard timer in the UE1 402 expires. If the UE2 404 did not start transmission of a corresponding PDCP PDU at the UE2 404 (e.g., RLC sequence number ("SN") not assigned), the PDCP PDU may not be transmitted anymore by the UE2 404.

In a fourth embodiment, if L3 relaying is used, PDCP discard timers may be partitioned and signaled between the UE1 402 and the UE2 404 in a manner like other embodiments for partitioning 'T2'.

In a fifth embodiment, sidelink radio bearers ("SLRB") may be configured using RRC signaling from a serving gNB. The SLRB configurations may be independently sent to each remote and relay UE. A relay UE may receive a configuration restricting it to multiplex data from only certain logical channels of one or more Tx-remote-UEs from the first interface 408 in the same TB towards a Rx-remote-UE. The restriction may configure that on a particular logical channel on the second interface 410, only LCHs from the first interface 408 with a given sl-Priority (e.g., '4') or with a given range of sl-Priority (e.g., `4 to 6') may be multiplexed. In the absence of RRC signaling from a serving gNB, a sidelink UE may use an SLRB configuration based on a pre-configuration. The logical channel restrictions and/or SLRB restrictions may be used at a particular sidelink UE only and not percolated from a remote UE to relay UE or vice-versa.

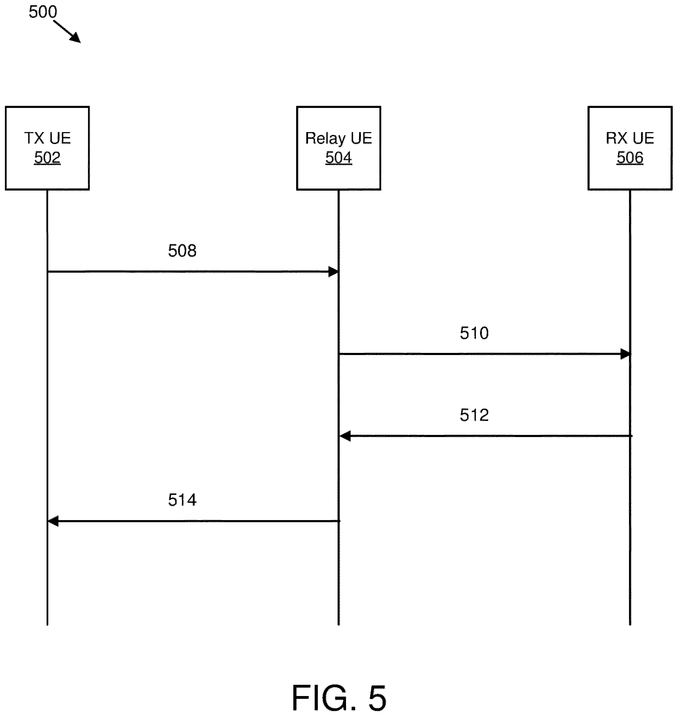

Figure 5 is a communication diagram illustrating one embodiment of a system 500 for communications including data and feedback relaying. The system 500 includes a TX UE 502 (e.g., one or more TX UEs), a relay UE 504 (e.g., one or more relay UEs), and an RX UE 506 (e.g., one or more RX UEs). Each of the communications shown may include one or more messages.

In a first communication 508 transmitted from the TX UE 502 to the relay UE 504, the TX UE 502 transmits a data packet to the relay UE 504. The TX UE 502 may also transmit a feedback request with the data packet to the relay UE 504. In a second communication 510 transmitted from the relay UE 504 to the RX UE 506, the relay UE 504 transmits the data packet to the RX UE 506. In a third communication 512 transmitted from the RX UE 506 to the relay UE 504, the RX UE 506 may transmit feedback corresponding to the data packet to the relay UE 504. In a fourth communication 514 transmitted from the relay UE 504 to the TX UE 502, the relay UE 504 may transmit the feedback corresponding to the data packet to the TX UE 502.

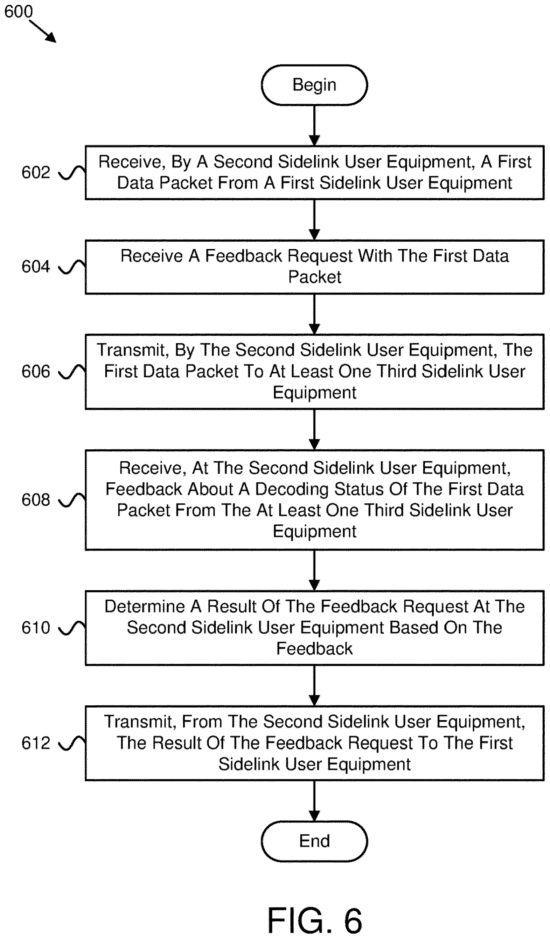

Figure 6 is a flow chart diagram illustrating one embodiment of a method 600 for data and feedback relaying. In some embodiments, the method 600 is performed by an apparatus, such as the remote unit 102. In certain embodiments, the method 600 may be performed by a processor executing program code, for example, a microcontroller, a microprocessor, a CPU, a GPU, an auxiliary processing unit, a FPGA, or the like.

In various embodiments, the method 600 includes receiving 602, by a second sidelink user equipment, a first data packet from a first sidelink user equipment. In some embodiments, the method 600 includes receiving 604 a feedback request with the first data packet. In certain embodiments, the method 600 includes transmitting 606, by the second sidelink user equipment, the first data packet to at least one third sidelink user equipment. In various embodiments, the method 600 includes receiving 608, at the second sidelink user equipment, feedback about a decoding status of the first data packet from the at least one third sidelink user equipment. In some embodiments, the method 600 includes determining 610 a result of the feedback request at the second sidelink user equipment based on the feedback. In certain embodiments, the method 600 includes transmitting 612, from the second sidelink user equipment, the result of the feedback request to the first sidelink user equipment.

The method 600 further comprises receiving a quality of service indicator corresponding to an interface used for transmitting the first data packet to the at least one third sidelink user equipment. The method 600 further comprises calculating a remaining packet delay budget based on a packet delay budget corresponding to the quality of service indicator. In various embodiments, the remaining packet delay budget comprises a packet delay budget minus an average link delay.

In one embodiment, the average link delay is determined based on a delay between the first sidelink user equipment transmitting a plurality of data packets and the second sidelink user equipment receiving the plurality of data packet. In certain embodiments, the remaining packet delay budget comprises a packet delay budget minus a fixed time. In some embodiments, the remaining packet delay budget comprises a packet delay budget minus a variable time determined based on at least one timer.

In various embodiments, the at least one timer comprises a first timer T1 and a second timer T2. In one embodiment, the method 600 further comprises receiving a minimum communication range and group size information in response to the at least one third sidelink user equipment being part of a group. In certain embodiments, the method 600 further comprises receiving a second data packet from a fourth sidelink user equipment.

In some embodiments, the method 600 further comprises transmitting the second data packet with the first data packet to the at least one third sidelink user equipment in response to the fourth sidelink user equipment having a feedback configuration that matches a feedback configuration for the first sidelink user equipment. In various embodiments, the result of the feedback request comprises a sidelink shared channel subheader corresponding to each third sidelink user equipment of the at least one third sidelink user equipment. In one embodiment, each sidelink shared channel subheader comprises a member identifier corresponding to a third sidelink user equipment of the at least one third sidelink user equipment.

In certain embodiments, the method 600 further comprises flushing a feedback buffer in response to receiving an acknowledgment for a corresponding third sidelink user equipment of the at least one third sidelink user equipment. In some embodiments, the method 600 further comprises flushing a feedback buffer in response to a corresponding packet delay budget being reached for a corresponding third sidelink user equipment of the at least one third sidelink user equipment. In various embodiments, the method 600 further comprises flushing a feedback buffer in response to a maximum number of hybrid automatic repeat request retransmissions being reached for a corresponding third sidelink user equipment of the at least one third sidelink user equipment.

In one embodiment, the method 600 further comprises receiving a packet data convergence protocol discard message in response to a corresponding discard timer expiring at the first sidelink user equipment. In certain embodiments, the method 600 further comprises, in response to transmission of a packet data convergence protocol protocol data unit not having started at a time at which the packet data convergence protocol discard message is received, not transmitting the packet data convergence protocol protocol data unit. In some embodiments, the method 600 further comprises not transmitting a packet data convergence protocol protocol data unit based on at least one timer.

In one embodiment, a method comprises: receiving, by a second sidelink user equipment, a first data packet from a first sidelink user equipment; receiving a feedback request with the first data packet; transmitting, by the second sidelink user equipment, the first data packet to at least one third sidelink user equipment; receiving, at the second sidelink user equipment, feedback about a decoding status of the first data packet from the at least one third sidelink user equipment; determining a result of the feedback request at the second sidelink user equipment based on the feedback; and transmitting, from the second sidelink user equipment, the result of the feedback request to the first sidelink user equipment.

In certain embodiments, the method further comprises receiving a quality of service indicator corresponding to an interface used for transmitting the first data packet to the at least one third sidelink user equipment.

In some embodiments, the method further comprises calculating a remaining packet delay budget based on a packet delay budget corresponding to the quality of service indicator.

In various embodiments, the remaining packet delay budget comprises a packet delay budget minus an average link delay.

In one embodiment, the average link delay is determined based on a delay between the first sidelink user equipment transmitting a plurality of data packets and the second sidelink user equipment receiving the plurality of data packet.

In certain embodiments, the remaining packet delay budget comprises a packet delay budget minus a fixed time.

In some embodiments, the remaining packet delay budget comprises a packet delay budget minus a variable time determined based on at least one timer.

In various embodiments, the at least one timer comprises a first timer T1 and a second timer T2.

In one embodiment, the method further comprises receiving a minimum communication range and group size information in response to the at least one third sidelink user equipment being part of a group.

In certain embodiments, the method further comprises receiving a second data packet from a fourth sidelink user equipment.

In some embodiments, the method further comprises transmitting the second data packet with the first data packet to the at least one third sidelink user equipment in response to the fourth sidelink user equipment having a feedback configuration that matches a feedback configuration for the first sidelink user equipment.

In various embodiments, the result of the feedback request comprises a sidelink shared channel subheader corresponding to each third sidelink user equipment of the at least one third sidelink user equipment.

In one embodiment, each sidelink shared channel subheader comprises a member identifier corresponding to a third sidelink user equipment of the at least one third sidelink user equipment.

In certain embodiments, the method further comprises flushing a feedback buffer in response to receiving an acknowledgment for a corresponding third sidelink user equipment of the at least one third sidelink user equipment.

In some embodiments, the method further comprises flushing a feedback buffer in response to a corresponding packet delay budget being reached for a corresponding third sidelink user equipment of the at least one third sidelink user equipment.

In various embodiments, the method further comprises flushing a feedback buffer in response to a maximum number of hybrid automatic repeat request retransmissions being reached for a corresponding third sidelink user equipment of the at least one third sidelink user equipment.

In one embodiment, the method further comprises receiving a packet data convergence protocol discard message in response to a corresponding discard timer expiring at the first sidelink user equipment.

In certain embodiments, the method further comprises, in response to transmission of a packet data convergence protocol protocol data unit not having started at a time at which the packet data convergence protocol discard message is received, not transmitting the packet data convergence protocol protocol data unit.

In some embodiments, the method further comprises not transmitting a packet data convergence protocol protocol data unit based on at least one timer.

In one embodiment, an apparatus comprises a second sidelink user equipment. The apparatus further comprises: a receiver that: receives a first data packet from a first sidelink user equipment; and receives a feedback request with the first data packet; a transmitter that transmits, by the second sidelink user equipment, the first data packet to at least one third sidelink user equipment; and a processor, wherein: the receiver receives, at the second sidelink user equipment, feedback about a decoding status of the first data packet from the at least one third sidelink user equipment; the processor determines a result of the feedback request at the second sidelink user equipment based on the feedback; and the transmitter transmits, from the second sidelink user equipment, the result of the feedback request to the first sidelink user equipment.

In certain embodiments, the receiver receives a quality of service indicator corresponding to an interface used for transmitting the first data packet to the at least one third sidelink user equipment.

In some embodiments, the processor calculates a remaining packet delay budget based on a packet delay budget corresponding to the quality of service indicator.

In various embodiments, the remaining packet delay budget comprises a packet delay budget minus an average link delay.

In one embodiment, the average link delay is determined based on a delay between the first sidelink user equipment transmitting a plurality of data packets and the second sidelink user equipment receiving the plurality of data packet.

In certain embodiments, the remaining packet delay budget comprises a packet delay budget minus a fixed time.

In some embodiments, the remaining packet delay budget comprises a packet delay budget minus a variable time determined based on at least one timer.

In various embodiments, the at least one timer comprises a first timer T1 and a second timer T2.

In one embodiment, the receiver receives a minimum communication range and group size information in response to the at least one third sidelink user equipment being part of a group.

In certain embodiments, the receiver receives a second data packet from a fourth sidelink user equipment.

In some embodiments, the transmitter transmits the second data packet with the first data packet to the at least one third sidelink user equipment in response to the fourth sidelink user equipment having a feedback configuration that matches a feedback configuration for the first sidelink user equipment.

In various embodiments, the result of the feedback request comprises a sidelink shared channel subheader corresponding to each third sidelink user equipment of the at least one third sidelink user equipment.

In one embodiment, each sidelink shared channel subheader comprises a member identifier corresponding to a third sidelink user equipment of the at least one third sidelink user equipment.

In certain embodiments, the processor flushes a feedback buffer in response to receiving an acknowledgment for a corresponding third sidelink user equipment of the at least one third sidelink user equipment.

In some embodiments, the processor flushes a feedback buffer in response to a corresponding packet delay budget being reached for a corresponding third sidelink user equipment of the at least one third sidelink user equipment.

In various embodiments, the processor flushes a feedback buffer in response to a maximum number of hybrid automatic repeat request retransmissions being reached for a corresponding third sidelink user equipment of the at least one third sidelink user equipment.

In one embodiment, the receiver receives a packet data convergence protocol discard message in response to a corresponding discard timer expiring at the first sidelink user equipment.

In certain embodiments, the processor, in response to transmission of a packet data convergence protocol protocol data unit not having started at a time at which the packet data convergence protocol discard message is received, does not transmit the packet data convergence protocol protocol data unit.

In some embodiments, the processor does not transmit a packet data convergence protocol protocol data unit based on at least one timer.

Embodiments may be practiced in other specific forms. The described embodiments are to be considered in all respects only as illustrative and not restrictive. The scope of the invention is, therefore, indicated by the appended claims rather than by the foregoing description.

## Claims

1. An apparatus (200) comprising a second sidelink user equipment (504), the apparatus (200) further comprising:
a receiver (212) that is configured to:
receive (602) a first data packet from a first sidelink user equipment (502); and
receive (604) a feedback request with the first data packet;
a transmitter (210) that is configured to transmit (606), by the second sidelink user
equipment (504), the first data packet to at least one third sidelink user equipment; (506) and
a processor (202), wherein:
the receiver (212) is configured to receive (608), at the second sidelink user equipment (504), feedback about a decoding status of the first data packet from the at least one third sidelink user equipment (506);
the processor (202) is configured to determine (610) a result of the feedback request at the second sidelink user equipment (504) based on the feedback; and
the transmitter (210) is configured to transmit (612), from the second sidelink user equipment (504), the result of the feedback request to the first sidelink user equipment (502),
wherein the receiver (212) is configured to receive a quality of service indicator corresponding to an interface used for transmitting the first data packet to the at least one third sidelink user equipment (506), and
**characterized in that**
the processor (202) is configured to calculate a remaining packet delay budget based on a packet delay budget corresponding to the quality of service indicator.

2. The apparatus (200) of claim 1, wherein the remaining packet delay budget comprises a packet delay budget minus an average link delay.

3. The apparatus (200) of claim 2, wherein the average link delay is determined based on a delay between the first sidelink user equipment (502) transmitting a plurality of data packets and the second sidelink user equipment (504) receiving the plurality of data packet.

4. The apparatus (200) of claim 1, wherein the remaining packet delay budget comprises a packet delay budget minus a fixed time.

5. The apparatus (200) of claim 1, wherein the remaining packet delay budget comprises a packet delay budget minus a variable time determined based on at least one timer, and the at least one timer comprises a first timer T1 and a second timer T2.

6. A method (600) at a second sidelink user equipment (504), the method (600) comprising:
receiving (602) a first data packet from a first sidelink user equipment (502);
receiving (604) a feedback request with the first data packet;
transmitting (606), by the second sidelink user equipment (504), the first data packet to at least one third sidelink user equipment (506);
receiving (608), at the second sidelink user equipment (504), feedback about a decoding status of the first data packet from the at least one third sidelink user equipment (506);
determining (610) a result of the feedback request at the second sidelink user equipment (504) based on the feedback; and
transmitting (612), from the second sidelink user equipment (504), the result of the feedback request to the first sidelink user equipment (502),
wherein the method (600) further comprises receiving a quality of service indicator corresponding to an interface used for transmitting the first data packet to the at least one third sidelink user equipment (506), and
**characterized in that** the method (600) further comprises calculating a remaining packet delay budget based on a packet delay budget corresponding to the quality of service indicator.

7. The method (600) of claim 6, wherein the remaining packet delay budget comprises a packet delay budget minus an average link delay.

8. The method (600) of claim 7, wherein the average link delay is determined based on a delay between the first sidelink user equipment (502) transmitting a plurality of data packets and the second sidelink user equipment (504) receiving the plurality of data packet.

9. The method (600) of claim 6, wherein the remaining packet delay budget comprises a packet delay budget minus a fixed time.

10. The method (600) of claim 6, wherein the remaining packet delay budget comprises a packet delay budget minus a variable time determined based on at least one timer, and the at least one timer comprises a first timer T1 and a second timer T2.

## Patentansprüche

1. Einrichtung (200), umfassend eine zweite Sidelink-Benutzerausrüstung (504), wobei die Einrichtung (200) ferner umfasst:
einen Empfänger (212), der konfiguriert ist zum:
Empfangen (602) eines ersten Datenpakets von einer ersten Sidelink-Benutzerausrüstung (502); und
Empfangen (604) einer Feedbackanforderung mit dem ersten Datenpaket;
einen Sender (210), der konfiguriert ist, um das erste Datenpaket über die zweite Sidelink-Benutzerausrüstung (504) auf mindestens eine dritte Sidelink-Benutzerausrüstung zu übertragen (606); (506) und
einen Prozessor (202), wobei:
der Empfänger (212) konfiguriert ist, um an der zweiten Sidelink-Benutzerausrüstung (504) ein Feedback über einen Dekodierungsstatus des ersten Datenpakets von der mindestens einen dritten Sidelink-Benutzerausrüstung (506) zu empfangen (608);
der Prozessor (202) konfiguriert ist, um ein Ergebnis der Feedbackanforderung an der zweiten Sidelink-Benutzerausrüstung (504) basierend auf dem Feedback zu bestimmen (610); und
der Sender (210) konfiguriert ist, um das Ergebnis der Feedbackanforderung von der zweiten Sidelink-Benutzerausrüstung (504) auf die erste Sidelink-Benutzerausrüstung (502) zu übertragen (612),
wobei der Empfänger (212) konfiguriert ist, um einen Dienstqualitätsindikator zu empfangen, der einer Schnittstelle entspricht, die zum Übertragen des ersten Datenpakets auf die mindestens eine dritte Sidelink-Benutzerausrüstung (506) verwendet wird, und
**dadurch gekennzeichnet, dass**
der Prozessor (202) konfiguriert ist, um ein verbleibendes Paketverzögerungsbudget basierend auf einem Paketverzögerungsbudget zu berechnen, das dem Dienstqualitätsindikator entspricht.

2. Einrichtung (200) nach Anspruch 1, wobei das verbleibende Paketverzögerungsbudget ein Paketverzögerungsbudget abzüglich einer durchschnittlichen Verknüpfungsverzögerung umfasst.

3. Einrichtung (200) nach Anspruch 2, wobei die durchschnittliche Verknüpfungsverzögerung auf der Grundlage einer Verzögerung zwischen der ersten Sidelink-Benutzerausrüstung (502), die eine Vielzahl von Datenpaketen überträgt, und der zweiten Sidelink-Benutzerausrüstung (504), welche die Vielzahl von Datenpaketen empfängt, bestimmt wird.

4. Einrichtung (200) nach Anspruch 1, wobei das verbleibende Paketverzögerungsbudget ein Paketverzögerungsbudget abzüglich einer festen Zeit umfasst.

5. Einrichtung (200) nach Anspruch 1, wobei das verbleibende Paketverzögerungsbudget ein Paketverzögerungsbudget abzüglich einer variablen Zeit umfasst, die auf der Grundlage mindestens eines Zeitgebers bestimmt wird, und der mindestens eine Zeitgeber einen ersten Zeitgeber T1 und einen zweiten Zeitgeber T2 umfasst.

6. Verfahren (600) an einer zweiten Sidelink-Benutzerausrüstung (504), wobei das Verfahren (600) umfasst:
Empfangen (602) eines ersten Datenpakets von einer ersten Sidelink-Benutzerausrüstung (502);
Empfangen (604) einer Feedbackanforderung mit dem ersten Datenpaket;
Übertragen (606) des ersten Datenpakets durch die zweite Sidelink-Benutzerausrüstung (504) auf mindestens eine dritte Sidelink-Benutzerausrüstung (506);
Empfangen (608) eines Feedbacks über einen Dekodierungsstatus des ersten Datenpakets von der mindestens einen dritten Sidelink-Benutzerausrüstung (506) an der zweiten Sidelink-Benutzerausrüstung (504);
Bestimmen (610) eines Ergebnisses der Feedbackanforderung an der zweiten Sidelink-Benutzerausrüstung (504) basierend auf dem Feedback; und
Übertragen (612) des Ergebnisses der Feedbackanforderung von der zweiten Sidelink-Benutzerausrüstung (504) auf die erste Sidelink-Benutzerausrüstung (502),
wobei das Verfahren (600) ferner das Empfangen eines Dienstqualitätsindikators umfasst, der einer Schnittstelle entspricht, die zum Übertragen des ersten Datenpakets auf die mindestens eine dritte Sidelink-Benutzerausrüstung (506) verwendet wird, und
**dadurch gekennzeichnet, dass**
das Verfahren (600) ferner das Berechnen eines verbleibenden Paketverzögerungsbudgets auf der Grundlage eines Paketverzögerungsbudgets, das dem Dienstqualitätsindikator entspricht, umfasst.

7. Verfahren (600) nach Anspruch 6, wobei das verbleibende Paketverzögerungsbudget ein Paketverzögerungsbudget abzüglich einer durchschnittlichen Verknüpfungsverzögerung umfasst.

8. Verfahren (600) nach Anspruch 7, wobei die durchschnittliche Verknüpfungsverzögerung basierend auf einer Verzögerung zwischen der ersten Sidelink-Benutzerausrüstung (502), die eine Vielzahl von Datenpaketen überträgt, und der zweiten Sidelink-Benutzerausrüstung (504), welche die Vielzahl von Datenpaketen empfängt, bestimmt wird.

9. Verfahren (600) nach Anspruch 6, wobei das verbleibende Paketverzögerungsbudget ein Paketverzögerungsbudget abzüglich einer festen Zeit umfasst.

10. Verfahren (600) nach Anspruch 6, wobei das verbleibende Paketverzögerungsbudget ein Paketverzögerungsbudget abzüglich einer variablen Zeit umfasst, die auf der Grundlage mindestens eines Zeitgebers bestimmt wird, und der mindestens eine Zeitgeber einen ersten Zeitgeber T1 und einen zweiten Zeitgeber T2 umfasst.

## Revendications

1. Appareil (200) comprenant un deuxième équipement utilisateur de liaison latérale (504), l'appareil (200) comprenant en outre :
un récepteur (212) qui est configuré pour:
recevoir (602) un premier paquet de données en provenance d'un premier équipement utilisateur de liaison latérale (502) ; et
recevoir (604) une demande de rétroaction avec le premier paquet de données ;
un transmetteur (210) qui est configuré pour transmettre (606), par le deuxième équipement utilisateur de liaison latérale (504), le premier paquet de données à au moins un troisième équipement utilisateur de liaison latérale ; (506) et
un processeur (202), dans lequel :
le récepteur (212) est configuré pour recevoir (608), au niveau du deuxième équipement utilisateur de liaison latérale (504), une rétroaction concernant un état de décodage du premier paquet de données provenant de l'au moins un troisième équipement utilisateur de liaison latérale (506) ;
le processeur (202) est configuré pour déterminer (610) un résultat de la demande de rétroaction au niveau du deuxième équipement utilisateur de liaison latérale (504) en fonction de la rétroaction ; et
le transmetteur (210) est configuré pour transmettre (612), à partir du deuxième équipement utilisateur de liaison latérale (504), le résultat de la demande de rétroaction au premier équipement utilisateur de liaison latérale (502),
dans lequel le récepteur (212) est configuré pour recevoir un indicateur de qualité de service correspondant à une interface utilisée pour la transmission du premier paquet de données à l'au moins un troisième équipement utilisateur de liaison latérale (506), et
**caractérisé en ce que**
le processeur (202) est configuré pour calculer un budget de retard de paquet restant en fonction d'un budget de retard de paquet correspondant à l'indicateur de qualité de service.

2. Appareil (200) selon la revendication 1, dans lequel le budget de retard de paquet restant comprend un budget de retard de paquet moins un retard de liaison moyen.

3. Appareil (200) selon la revendication 2, dans lequel le retard de liaison moyen est déterminé en fonction d'un retard entre le premier équipement utilisateur de liaison latérale (502) transmettant une pluralité de paquets de données et le deuxième équipement utilisateur de liaison latérale (504) recevant la pluralité de paquet de données.

4. Appareil (200) selon la revendication 1, dans lequel le budget de retard de paquet restant comprend un budget de retard de paquet moins un temps fixe.

5. Appareil (200) selon la revendication 1, dans lequel le budget de retard de paquet restant comprend un budget de retard de paquet moins un temps variable déterminé en fonction d'au moins un temporisateur, et l'au moins un temporisateur comprend un premier temporisateur T1 et un second temporisateur T2.

6. Procédé (600) au niveau d'un deuxième équipement utilisateur de liaison latérale (504), le procédé (600) comprenant :
la réception (602) d'un premier paquet de données en provenance d'un premier équipement utilisateur de liaison latérale (502) ;
la réception (604) d'une demande de rétroaction avec le premier paquet de données ;
la transmission (606), par le deuxième équipement utilisateur de liaison latérale (504), du premier paquet de données à au moins un troisième équipement utilisateur de liaison latérale (506) ;
la réception (608), au niveau du deuxième équipement utilisateur de liaison latérale (504), d'une rétroaction concernant un état de décodage du premier paquet de données provenant de l'au moins un troisième équipement utilisateur de liaison latérale (506) ;
la détermination (610) d'un résultat de la demande de rétroaction au niveau du deuxième équipement utilisateur de liaison latérale (504) en fonction de la rétroaction ; et
la transmission (612), à partir du deuxième équipement utilisateur de liaison latérale (504), du résultat de la demande de rétroaction au premier équipement utilisateur de liaison latérale (502),
dans lequel le procédé (600) comprend en outre la réception d'un indicateur de qualité de service correspondant à une interface utilisée pour la transmission du premier paquet de données à l'au moins un troisième équipement utilisateur de liaison latérale (506), et
**caractérisé en ce que**
le procédé (600) comprend en outre le calcul d'un budget de retard de paquet restant en fonction d'un budget de retard de paquet correspondant à l'indicateur de qualité de service.

7. Procédé (600) selon la revendication 6, dans lequel le budget de retard de paquet restant comprend un budget de retard de paquet moins un retard de liaison moyen.

8. Procédé (600) selon la revendication 7, dans lequel le retard de liaison moyen est déterminé en fonction d'un retard entre le premier équipement utilisateur de liaison latérale (502) transmettant une pluralité de paquets de données et le deuxième équipement utilisateur de liaison latérale (504) recevant la pluralité de paquet de données.

9. Procédé (600) selon la revendication 6, dans lequel le budget de retard de paquet restant comprend un budget de retard de paquet moins un temps fixe.

10. Procédé (600) selon la revendication 6, dans lequel le budget de retard de paquet restant comprend un budget de retard de paquet moins un temps variable déterminé en fonction d'au moins un temporisateur, et l'au moins un temporisateur comprend un premier temporisateur T1 et un second temporisateur T2.
